# EUROPEAN PATENT SPECIFICATION

(11) **EP 3 246 980 B1**
(45) Date of publication and mention of the grant of the patent: **20.11.2019**
(21) Application number: 17171504.8
(22) Date of filing: 17.05.2017
(51) Int. Cl.: H01M 10/054, H01M 10/056, H01M 4/66, H01M 4/133, H01M 4/134, H01M 4/583, H01M 10/0563, H01M 10/058

(54) **METAL-ION BATTERY AND METHOD FOR PREPARING THE SAME**
METALL-IONEN-BATTERIE UND VERFAHREN ZUR HERSTELLUNG DAVON
BATTERIE À IONS MÉTALLIQUES ET SON PROCÉDÉ DE PRÉPARATION

(30) Priority: 17.05.2016 US 201662337629 P; 16.12.2016 TW 105141738
(43) Date of publication of application: 22.11.2017
(73) Proprietor: Industrial Technology Research Institute, Chutung, Hsinchu 31040 (TW)
(72) Inventor: Chiang, Chien-Chih, New Taipei City 247 (TW); Chen, Kuang-Yao, Hualien County 973 (TW); Lin, Chun-Kai, Yilan County 261 (TW); Wu, Chun-Hsing, Taipei City 106 (TW)
(74) Representative: Michalski Hüttermann & Partner Patentanwälte mbB

(56) References cited:
- US-A- 3 988 163
- US-A1- 2009 162 736
- US-A1- 2015 249 261
- STUMPP E ET AL: "Preparation of metal halide graphite intercalation compounds by intercalate exchange", SYNTHETIC METALS, ELSEVIER SEQUOIA, LAUSANNE, CH, vol. 34, no. 1-3, 1 December 1989 (1989-12-01), pages 73-78, XP024160017, ISSN: 0379-6779, DOI: 10.1016/0379-6779(89)90366-4 [retrieved on 1989-12-01]

## Description

### TECHNICAL FIELD

The technical field relates to an energy storage device and a method for fabricating the same, and in particular to a metal-ion battery and a method for fabricating the same.

### BACKGROUND

Aluminum is the most abundant metal on earth, and electronic devices made of aluminum have the advantage of costing little. An aluminum-based redox couple, which involves three electron transfers during electrochemical charge/discharge reactions, provides relatively high storage capacity. Additionally, because of its lower reactivity and flammability, such an aluminum-ion battery might offer significant safety improvements.

US 2009/162736 A1 describes a composition that includes a ternary electrolyte having a melting point greater than about 150 degree Celsius.

US 3988163 A describes a secondary battery utilizing a molten sodium negative reactant, mixture of metal halides, sulfur positive reactant melt having a carbon powder dispersed within the melt, a molten sodium haloaluminate electrolyte, and a selectively ionically-conductive separator positioned between the negative and positive reactants.

US 2015/249261 A1 describes a metal-ion battery including an anode including aluminum; a cathode including a layered, active material; and an electrolyte disposed between the anode and the cathode to support reversible deposition and dissolution of aluminum at the anode and reversible intercalation and de-intercalation of anions at the cathode.

However, conditional metal-ion batteries exhibit low discharge voltage, low storage capacity, and ill-defined discharge voltage plateaus. Therefore, there is a need to develop a novel battery for solving the above problems.

### SUMMARY

The invention is defined by the features of the independent claims. Preferred embodiments are defined by the features of the dependent claims.

According to embodiments of the disclosure, the disclosure provides an energy storage device, such as metal-ion battery. The metal-ion battery includes a positive electrode; a separator; a negative electrode, wherein the positive electrode is separated from the negative electrode by the separator; and an electrolyte, disposed between the positive electrode and the negative electrode. The electrolyte includes ionic liquid with a melting point less than 100°C, aluminum halide, and metal halide, wherein metal halide is silver halide, copper halide, cobalt halide, ferric halide, indium halide, cadmium halide, nickel halide, tin halide, chromium halide, lanthanum halide, yttrium halide, titanium halide, manganese halide, molybdenum halide, or a combination thereof.

According to embodiments of the disclosure, the disclosure provides a method for fabricating the metal-ion battery. The method includes providing a positive electrode and a negative electrode; providing a separator to separate the positive electrode from the negative electrode; and providing an electrolyte, wherein the electrolyte is disposed between the positive electrode and the negative electrode. The electrolyte includes ionic liquid with a melting point less than 100°C, aluminum halide, and metal halide, wherein the metal halide is silver halide, copper halide, cobalt halide, ferric halide, indium halide, cadmium halide, nickel halide, tin halide, chromium halide, lanthanum halide, yttrium halide, titanium halide, manganese halide, molybdenum halide, or a combination thereof.

A detailed description is given in the following embodiments with reference to the accompanying drawings.

### BRIEF DESCRIPTION OF THE DRAWINGS

FIG. 1 is a schematic view of the metal-ion battery according to an embodiment of the disclosure; and
FIGs. 2-12 are graphs plotting voltage against time during the charging and discharging of the metal-ion batteries according to Examples of the disclosure.

### DETAILED DESCRIPTION

In the following detailed description, for the purposes of explanation, numerous specific details are set forth in order to provide a thorough understanding of the disclosed embodiments. It will be apparent, however, that one or more embodiments may be practiced without these specific details. In other instances, well-known structures and devices are shown schematically in order to simplify the drawing.

The disclosure provides a metal-ion battery. According to embodiments of the disclosure, the electrolyte of the metal-ion battery includes aluminum halide and metal halide which is able to serve as Lewis acid. Therefore, during the charging and discharging of the metal-ion battery, the metal halide can be formed a halometallate, which includes a halometallate anion having an ion size distinct from the ion size of haloaluminate anion, resulting in that the ionic liquid is reversible in intercalation-deintercalation process. In addition, according to some embodiments of the disclosure, the halometallate anion can have a tetrahedral configuration (identical to the haloaluminate anion) and have a smaller ion size than that of the haloaluminate anion. Furthermore, the halometallate anion can have a trigonal configuration according to embodiments of the disclosure. Therefore, the haloaluminate may be more apt to intercalate into the active material (such as a graphite), or force the haloaluminate to intercalate into the active material, thereby enhancing the discharging voltage and the total capacity of the metal-ion battery.

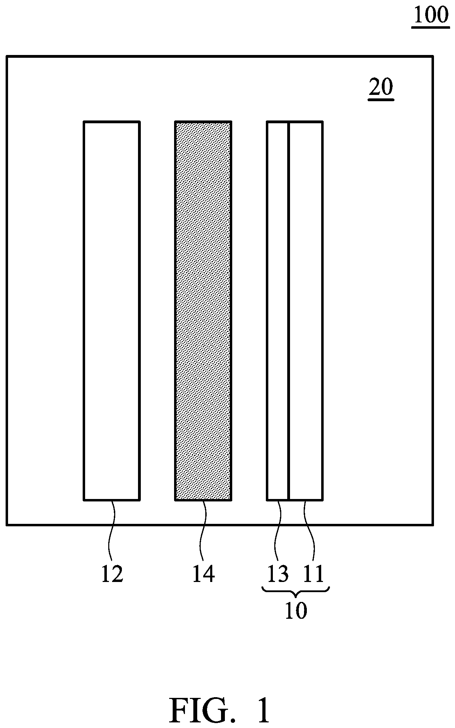

FIG. 1 is a schematic view of the metal-ion battery according to an embodiment of the disclosure. As shown in FIG. 1, the metal-ion battery 100 includes a positive electrode 10, a negative electrode 12, and a separator 14, wherein the separator 14 is disposed between the positive electrode 10 and the negative electrode 12. The separator 14 can mitigate against electrical shorting of the positive electrode 10 and the negative electrode 12. The metal-ion battery 100 includes an electrolyte 20 disposed in the metal-ion battery 100, and between the positive electrode and the negative electrode, and contacting the positive electrode 10 and negative electrode 12. The metal-ion battery 100 can be a rechargeable secondary battery, although primary batteries also are encompassed by the disclosure.

According to embodiments of the disclosure, the positive electrode 10 can include a current-collecting layer 11 and an active material 13 disposed on the current-collecting layer 11. According to embodiments of the disclosure, the positive electrode 10 consists of the current-collecting layer 11 and active material 13. According to embodiments of the disclosure, the current-collecting layer 11 is a conductive carbon substrate, such as carbon cloth, carbon felt, or carbon paper. For example, the conductive carbon substrate can have a sheet resistance from about 1mΩ·cm² to 6mΩ·cm² and a carbon content of greater than 65wt%. The active material 13 can include a layered active layer or an agglomeration of the layered active layer. According to embodiments of the disclosure, the active material 13 can be an intercalated carbon material. According to the invention the active material is a layered active layer, such as graphite (including natural graphite, artificial graphite, mesophase carbon microbead, pyrolytic graphite, foamed graphite, flake graphite, or expanded graphite), graphene, carbon nanotube or a combination thereof. According to embodiments of the disclosure, the active material 13 can be layered double hydroxide, layered oxide, layered chalcogenide or a combination thereof. The active layer 13 can have a porosity between about 0.05 and 0.95, such as between about 0.3 and 0.9. The active material 13 can grow directly on the current-collecting layer 11 (i.e. there is no other layer between the active layer and the current-collecting layer). Furthermore, the active material 13 can be affixed to the current-collecting layer 11 via an adhesive.

According to embodiments of the disclosure, the material of the separator 14 can be glass fiber, polyethylene (PE), polypropylene (PP), nonwoven fabric, wood fiber, polyether sulfones (PES), ceramic fiber or a combination thereof.

According to embodiments of the disclosure, the negative electrode 12 comprises a metal or an alloy of the metal, a current-collecting layer, or a combination thereof. For example, the negative electrode 12 can consist of the metal or the alloy of the metal. In addition, the negative electrode 12 can also be current-collecting layer. Furthermore, the negative electrode 12 can consist of the current-collecting layer and the metal or the alloy of the metal (disposed on the current-collecting layer). The negative electrode includes silver, copper, iron, cobalt, aluminum, zinc, indium, cadmium, nickel, tin, chromium, lanthanum, yttrium, titanium, manganese, tungsten, tantalum, molybdenum or an alloy thereof. In order to increase the total capacity of the metal-ion battery and suppress the thermal runaway of the metal-ion battery during charging and discharging, the negative electrode is not alkali metal (such as Li) or alkaline earth metal. The current-collecting layer can be conductive carbon substrate, such as carbon cloth, carbon felt, or carbon paper. For example, the conductive carbon substrate can have a sheet resistance from about 1mΩ·cm² to 6mΩ·cm² and a carbon content of greater than 65wt%.

According to the invention, the electrolyte 20 includes an ionic liquid with a melting point less than 100°C, aluminum halide, and metal halide. The molar ratio of the total mole of the metal halide and the aluminum halide to the ionic liquid is from 1.1:1 to 2.1:1, and it can be at least about 1.1 or at least about 1.2, such as between about 1.1 and 2.1, about 1.1, about 1.3, about 1.5, or about 1.8. When the molar ratio of the total mole of the metal halide and the aluminum halide to the ionic liquid is less than 1.1, the electrolyte would be Lewis-neutral, resulting in reducing the amount of active ingredient for intercalation and going against the intercalation. When the molar ratio of the total mole of the metal halide and the aluminum halide to the ionic liquid is greater than 2.1, the metal halide and aluminum halide are difficult to dissolve in ionic liquid to obtain a miscible fluid. The ionic liquid can have a melting point less than 100°C. For example, the ionic liquid can be a room temperature ionic liquid (RTIL). According to the invention, the ionic liquid is selected from alkylimidazolium salt, alkylpyridinium salt, alkylfluoropyrazolium salt, alkyltriazolium salt, aralkylammonium salt, alkylalkoxyammonium salt, aralkylphosphonium salt, aralkylsulfonium salt, or a combination thereof. According to embodiments of the disclosure, the electrolyte can further include an additive to increase electrical conductivity and lower the viscosity.

The metal halide can include a metal fluoride, metal chloride, or metal bromide serving as Lewis acid, in order to provide a reversible electrolyte system. In addition, in order to increase the total capacity of the metal-ion battery and suppress the thermal runaway of the metal-ion battery during charging and discharging, the metal halide is not alkaline halide or alkaline earth halide. The metal halide is silver halide (such as silver fluoride, silver chloride, or silver bromide), copper halide (such as copper fluoride, copper chloride, or copper bromide), iron halide (such as iron fluoride, iron chloride, or iron bromide), cobalt halide (such as cobalt fluoride, cobalt chloride, or cobalt bromide), zinc halide (such as zinc fluoride, zinc chloride, or zinc bromide), indium halide (such as indium fluoride, indium chloride, or indium bromide), cadmium halide (such as cadmium fluoride, cadmium chloride, or cadmium bromide), nickel halide (such as nickel fluoride, nickel chloride, or nickel bromide), tin halide (such as tin fluoride, tin chloride, or tin bromide), chromium halide (such as chromium fluoride, chromium chloride, or chromium bromide), lanthanum halide (such as lanthanum fluoride, lanthanum chloride, or lanthanum bromide), yttrium halide (such as yttrium fluoride, silver chloride, or yttrium bromide), titanium halide (such as titanium fluoride, titanium chloride, or titanium bromide), manganese halide (such as manganese fluoride, manganese chloride, or manganese bromide), molybdenum halide (such as molybdenum fluoride, molybdenum chloride, or molybdenum bromide), or a combination thereof. Herein, the metal halide of the disclosure can include at least one metal halide with various valences. For example, copper chloride of the disclosure can be CuCl, CuCl₂, or a combination thereof; iron chloride can be FeCl₂, FeCl₃, or a combination thereof; cobalt chloride can be CoCl₃, CoCl₂, or a combination thereof; chromium chloride can be CrCl₂, CrCl₃, or a combination thereof; zinc chloride can be ZnCl₂, ZnCl₄, or a combination thereof; tin chloride can be SnCl₂, SnCl₄, or a combination thereof; and, manganese chloride can be MnCl₂, MnCl₃, or a combination thereof. According to embodiments of the disclosure, the metal halide of the disclosure cannot include aluminum halide. As the result, during the charging and discharging of the metal-ion battery, the metal halide can be formed a halometallate, which includes a halometallate anion having an ion size distinct from the ion size of haloaluminate anion.

The electrolyte according to the invention includes aluminum halide (such as aluminum fluoride, aluminum chloride, or aluminum bromide) in order to form at least two various halometallates (one of the various halometallates is haloaluminate) in the electrolyte, during the charging and discharging of the metal-ion battery. According to some embodiments of the disclosure, the molar ratio of the metal halide to the aluminum halide is from 1:100 to 1:1. When the molar ratio of the metal halide to the aluminum halide is too low, the capacity generated by the intercalation of the metal halide is insufficient, and the metal-ion battery maintains conventional intercalation of aluminum halide. When the molar ratio of the metal halide to the aluminum halide is too high, the metal halide and aluminum halide are difficult to dissolve in ionic liquid to obtain a miscible fluid, resulting in precipitate formation.

Since the discharge platform formed by intercalating the metal halide of the disclosure into the active material (such as a graphite) is less than the discharge platform (about 1.8V) formed by intercalating the aluminum chloride into the active material, the metal halide of the disclosure is more apt to intercalate into the graphite electrode than the aluminum chloride during the charging and discharging of the metal-ion battery. It should be noted that the metal employed by the negative electrode can be the same as or different from the metal of the metal halide.

According to some embodiments of the disclosure, when the metal halide of the disclosure is copper halide, iron halide, cobalt halide, chromium halide, zinc halide, tin halide, or manganese halide (such as copper chloride, cobalt chloride, iron chloride, chromium chloride, zinc chloride, tin chloride, or manganese chloride), a halometallate (such as chlorometallate) having a bivalent metal is formed during the charging and discharging of the metal-ion battery. Due to the trigonal configuration of the halometallate having a bivalent metal, the haloaluminate may be more apt to intercalate into the active material (such as a graphite), or force the haloaluminate to intercalate into the active material, thereby enhancing the discharging voltage and the total capacity of the metal-ion battery. On the other hand, according to some embodiments of the disclosure, when the metal halide of the disclosure is FeCl₂, the anion of the halometallate (such as FeCl₃⁻) derived from FeCl₂ can be formed after charging and discharging of the metal-ion battery, wherein the ion size of FeCl₃⁻ (1.68Å, i.e. the height of the trigonal configuration) is less than the ion size (5.28Å) of the anion of the haloaluminate. As a result, the metal halide having a relatively small size may be more apt to intercalate into the active material (such as a graphite), or force the haloaluminate to intercalate into the active material, thereby enhancing the discharging voltage and the total capacity of the metal-ion battery. According to some embodiments of the disclosure, the ion size of the anion of the halometallate derived from the metal chloride of the disclosure after charging and discharging of the metal-ion battery can be less than about 5.20Å.

According to the invention, the disclosure also provides a method for fabricating the aforementioned metal-ion battery. The method includes providing a positive electrode and a negative electrode; providing a separator to separate the positive electrode from the negative electrode; and, providing an electrolyte disposed between the positive electrode and the negative electrode, wherein the electrolyte includes the ionic liquid with a melting point less than 100°C, aluminum halide, and metal halide of the disclosure, wherein the metal halide is silver halide, copper halide, cobalt halide, ferric halide, indium halide, cadmium halide, nickel halide, tin halide, chromium halide, lanthanum halide, yttrium halide, titanium halide, manganese halide, molybdenum halide, or a combination thereof.

According to embodiments of the disclosure, the positive electrode can be made of a pre-intercalated material prepared by electrochemical process or vapor phase intercalation.

According to the invention, when the electrolyte includes the ionic liquid, metal halide, and aluminum halide, the metal halide and aluminum halide can add into the ionic liquid at the same time to obtain the electrolyte. Next, the electrolyte is disposed between the positive electrode and the negative electrode.

According to some embodiments of the disclosure, when the electrolyte includes the ionic liquid, metal halide, and aluminum halide, a part of the ionic liquid can be mixed with the metal halide in advance, and the result can be disposed between the positive electrode and the negative electrode. Next, a bias voltage can be applied between the positive electrode and the negative electrode, and then the metal halide reacts with the ionic liquid to form a halometallate. The halometallate can intercalate into the positive electrode. After applying the bias, the residual ionic liquid can be mixed with the aluminum halide, and the result can be disposed between the positive electrode and the negative electrode. Herein, the halometallate derived from the metal halide intercalates into the active material to obtain the pre-intercalated material as the positive electrode. The pre-intercalated material can facilitate the haloaluminate derived from the aluminum halide to more easily intercalate into the active material, thereby enhancing the discharging voltage and the total capacity of the metal-ion battery.

According to other embodiments of the disclosure, when the electrolyte includes the ionic liquid, metal halide, and aluminum halide, a part of the ionic liquid can be mixed with the aluminum halide in advance, and the result can be disposed between the positive electrode and the negative electrode. Next, a bias voltage can be applied between the positive electrode and the negative electrode, and then the aluminum halide reacts with the ionic liquid to form a haloaluminate. The haloaluminate can intercalate into the positive electrode. After applying the bias, the residual ionic liquid can be mixed with the metal halide, and the result can be disposed between the positive electrode and the negative electrode. Herein, the haloaluminate derived from the aluminum halide intercalates into the active material to obtain the pre-intercalated material as the positive electrode. The pre-intercalated material can facilitate the halometallate derived from the metal halide to more easily intercalate into the active material, thereby enhancing the discharging voltage and the total capacity of the metal-ion battery.

According to embodiments of the disclosure, the method for preparing the pre-intercalated material can include heating the metal halide to produce a metal halide gas; and subjecting the positive electrode to a pre-intercalation by means of the metal halide gas.

According to embodiments of the disclosure, the method for preparing the pre-intercalated material can include heating the aluminum halide to produce an aluminum halide gas; and subjecting the positive electrode to a pre-intercalation by means of the aluminum halide gas.

Below, exemplary embodiments will be described in detail with reference to the accompanying drawings so as to be easily realized by a person having ordinary knowledge in the art. The inventive concept may be embodied in various forms without being limited to the exemplary embodiments set forth herein. The invention is set out in the appended claims. Descriptions of well-known parts are omitted for clarity, and like reference numerals refer to like elements throughout.

### EXAMPLES

### Example 1:

An aluminum foil (with a thickness of 0.025mm) was cut to obtain an aluminum electrode. Next, a separator (two layers with trade No. Whatman GFA) was provided. Next, a graphite electrode (including an active layer disposed on a current-collecting substrate, wherein the current-collecting substrate was carbon fiber paper, and the active layer was expanded graphite (53mg)) was provided. Next, the aluminum electrode (serving as the negative electrode), the separator, and the graphite electrode (serving as the positive electrode) were placed in sequence and sealed within an aluminum plastic pouch. Next, an electrolyte (including aluminum chloride (AlCl₃), ferrous chloride (FeCl₂), and 1-ethyl-3-methylimidazolium chloride ([EMIm]Cl), wherein the molar ratio of FeCl₂ to AlCl₃ was about 1:13, and the molar ratio of AlCl₃ and FeCl₂ to [EMIm]Cl was about 1.4:1) was injected into the aluminum plastic pouch, obtaining the metal-ion battery (1).

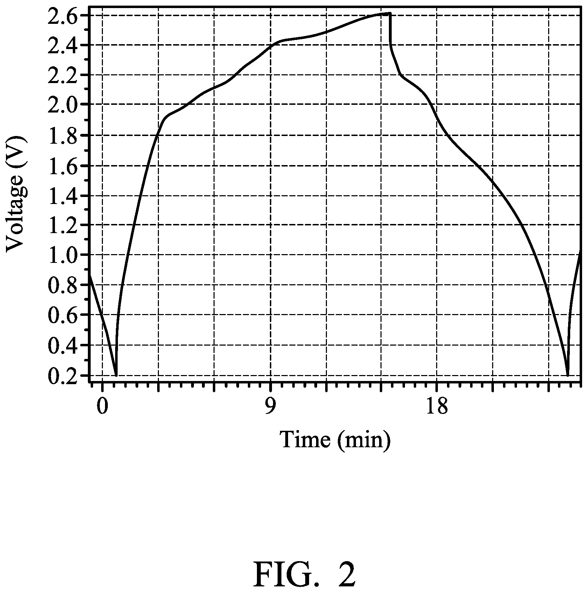

Next, the metal-ion battery (1) of Example 1 was charged (to about 2.6V) and discharged (to about 0.3V) at a current density of about 1000 mA/g by a NEWARE battery analyzer to analyze the performance thereof. The maximum specific capacity of the metal-ion battery (1) is about 159mAh/g, as shown in Table 1. FIG. 2 is a graph plotting voltage against time during the charging and discharging of the metal-ion battery (1) of Example 1. As shown in FIG. 2, a plurality of charging platforms in a range from 2.0V to 2.6V and a plurality of discharging platforms in a range from 2.2V to 1.0V were observed. In addition, the metal-ion battery (1) was still operable after more than about 400 charging/discharging cycles (at the current density of about 1000 mA/g).

### Reproducibility

### Example 2:

An aluminum foil (with a thickness of 0.025mm) was cut to obtain an aluminum electrode. Next, a separator (two layers with trade No. Whatman GFA) was provided. Next, a graphite electrode (including an active layer disposed on a current-collecting substrate, wherein the current-collecting substrate was carbon fiber paper, and the active layer was expanded graphite (57mg)) was provided. Next, the aluminum electrode (serving as the negative electrode), the separator, and the graphite electrode (serving as the positive electrode) were placed in sequence and sealed within an aluminum plastic pouch. Next, an electrolyte (including aluminum chloride (AlCl₃), ferrous chloride (FeCl₂), and 1-ethyl-3-methylimidazolium chloride ([EMIm]Cl), wherein the molar ratio of FeCl₂ to AlCl₃ was about 1:13, and the molar ratio of AlCl₃ and FeCl₂ to [EMIm]Cl was about 1.4:1) was injected into the aluminum plastic pouch, obtaining the metal-ion battery (2).

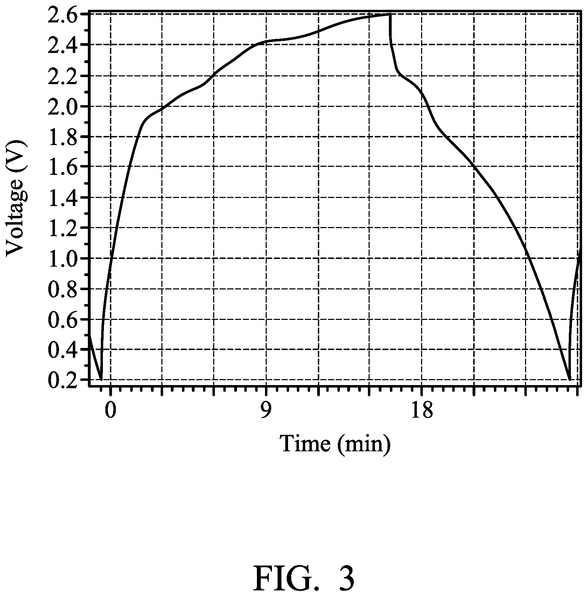

Next, the metal-ion battery (2) of Example 2 was charged (to about 2.6V) and discharged (to about 0.3V) at a current density of about 1000 mA/g by a NEWARE battery analyzer to analyze the performance thereof. The maximum specific capacity of the metal-ion battery (2) is about 173.3mAh/g, as shown in Table 1 and FIG. 3.

### Example 3:

Example 3 was performed in the same manner as Example 1 except that the molar ratio of FeCl₂ to AlCl₃ was reduced from 1:13 to 1:27 and the amount of expanded graphite was reduced from 53mg to 42mg. Thus, the metal-ion battery (3) was obtained.

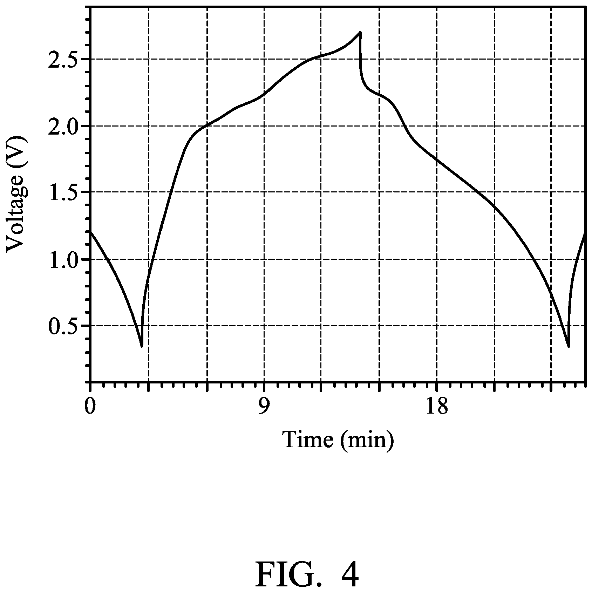

Next, the metal-ion battery (3) of Example 3 was charged (to about 2.6V) and discharged (to about 0.3V) at a current density of about 1000 mA/g by a NEWARE battery analyzer to analyze the performance thereof. The maximum specific capacity of the metal-ion battery (3) is about 176mAh/g, as shown in Table 1 and FIG. 4.

### Example 4:

Example 4 was performed in the same manner as Example 1 except that the molar ratio of FeCl₂ to AlCl₃ was increased from 1:13 to 3:11 and the amount of expanded graphite was increased from 57mg to 63mg. Thus, the metal-ion battery (4) was obtained.

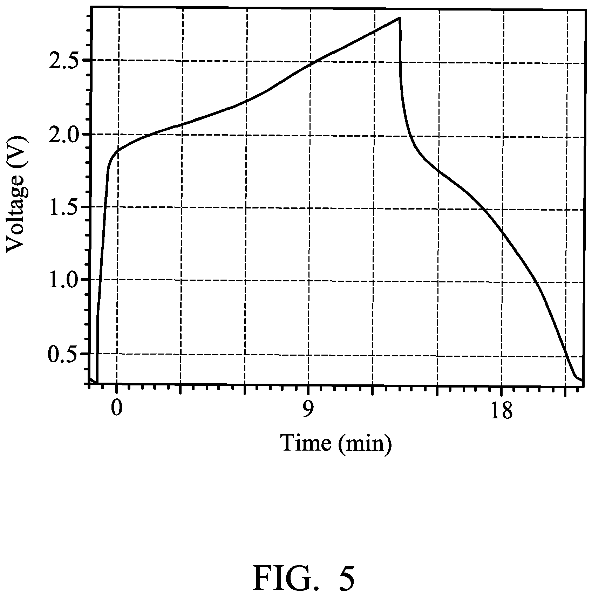

Next, the metal-ion battery (4) of Example 4 was charged (to about 2.8V) and discharged (to about 0.3V) at a current density of about 1000 mA/g by a NEWARE battery analyzer to analyze the performance thereof. The maximum specific capacity of the metal-ion battery (4) is about 169mAh/g, as shown in Table 1 and FIG. 5.

### Comparative Example 1:

An aluminum foil (with a thickness of 0.025mm) was cut to obtain an aluminum electrode. Next, a separator (two layers with trade No. Whatman GFA) was provided. Next, a graphite electrode (including an active layer disposed on a current-collecting substrate, wherein the current-collecting substrate was carbon fiber paper, and the active layer was expanded graphite (59mg)) was provided. Next, the aluminum electrode (serving as the negative electrode), the separator, and the graphite electrode (serving as the positive electrode) were placed in sequence and sealed within an aluminum plastic pouch. Next, an electrolyte (including aluminum chloride (AlCl₃) and 1-ethyl-3-methylimidazolium chloride ([EMIm]Cl), wherein the molar ratio of AlCl₃ to [EMIm]Cl was about 1.4:1) was injected into the aluminum plastic pouch, obtaining the metal-ion battery (5).

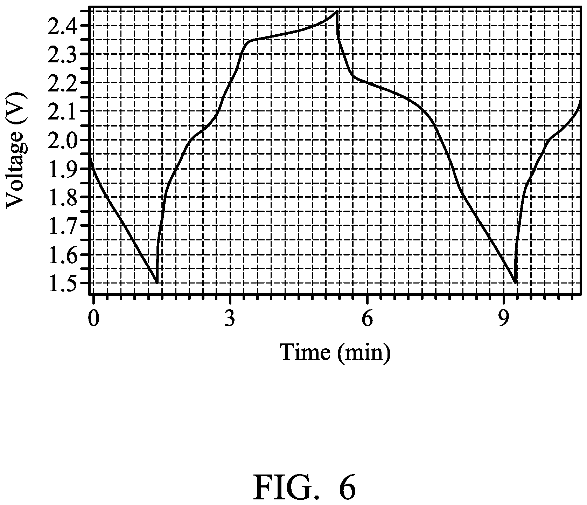

Next, the metal-ion battery (5) of Comparative Example 1 was charged (to about 2.45V) and discharged (to about 1.5V) at a current density of about 1000 mA/g by a NEWARE battery analyzer to analyze the performance thereof. The maximum specific capacity of the metal-ion battery (5) is about 72.1mAh/g, as shown in Table 1 and FIG. 6.

**Table 1**

| | metal chloride | maximum specific capacity (mAh/g) |
|---|---|---|
| metal-ion battery (1) | AlCl₃/FeCl₂ (13:1) | 161 |
| metal-ion battery (2) | AlCl₃/FeCl₂ (13:1) | 173.3 |
| metal-ion battery (3) | AlCl₃/FeCl₂ (27:1) | 176 |
| metal-ion battery (4) | AlCl₃/FeCl₂ (11:3) | 169 |
| metal-ion battery (5) | AlCl₃ | 72.1 |

As shown in Table 1, in comparison with the metal-ion battery (5) (the electrolyte of metal-ion battery (5) consisting of aluminum chloride and [EMIm]Cl), the maximum specific capacity of the metal-ion battery (2) is about 2.4 times higher than that of the metal-ion battery (5) and the charging/discharging platforms of the metal-ion battery (2) are increased, since the electrolyte of the metal-ion battery (2) includes both AlCl₃ and FeCl₂.

### Example 5:

An aluminum foil (with a thickness of 0.025mm) was cut to obtain an aluminum electrode. Next, a separator (two layers with trade No. Whatman GFA) was provided. Next, a graphite electrode (including an active layer disposed on a current-collecting substrate, wherein the current-collecting substrate was carbon fiber paper, and the active layer was expanded graphite (77mg)) was provided. Next, the aluminum electrode (serving as the negative electrode), the separator, and the graphite electrode (serving as the positive electrode) were placed in sequence and sealed within an aluminum plastic pouch. Next, an electrolyte (including aluminum chloride (AlCl₃), zinc chloride (ZnCl₂), and 1-ethyl-3-methylimidazolium chloride ([EMIm]Cl), wherein the molar ratio of ZnCl₂ to AlCl₃ was about 1:13, and the molar ratio of AlCl₃ and ZnCl₂ to [EMIm]Cl was about 1.4:1) was injected into the aluminum plastic pouch, obtaining the metal-ion battery (6).

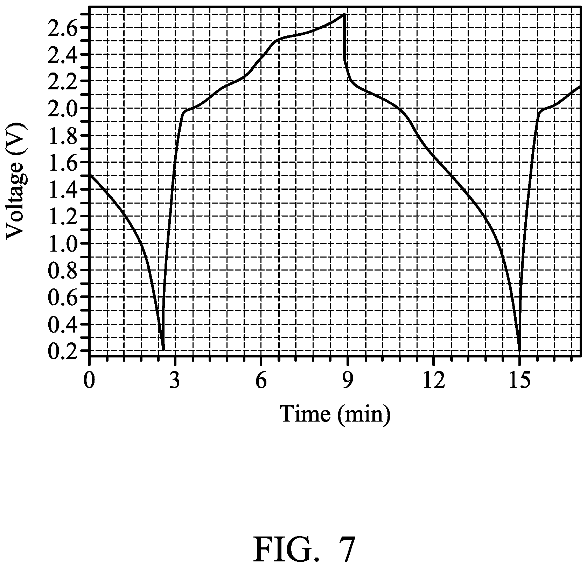

Next, the metal-ion battery (6) of Example 5 was charged (to about 2.7V) and discharged (to about 0.2V) at a current density of about 1000 mA/g by a NEWARE battery analyzer to analyze the performance thereof. The maximum specific capacity of the metal-ion battery (6) is about 106 mAh/g, as shown in Table 2. FIG. 7 is a graph plotting voltage against time during the charging and discharging of the metal-ion battery (6) of Example 5. As shown in FIG. 7, a plurality of charging platforms in a range from 1.9V to 2.7V and a plurality of discharging platforms in a range from 2.3V to 0.2V were observed.

### Example 6:

An aluminum foil (with a thickness of 0.025mm) was cut to obtain an aluminum electrode. Next, a separator (two layers with trade No. Whatman GFA) was provided. Next, a graphite electrode (including an active layer disposed on a current-collecting substrate, wherein the current-collecting substrate was carbon fiber paper, and the active layer was expanded graphite (66mg)) was provided. Next, the aluminum electrode (serving as the negative electrode), the separator, and the graphite electrode (serving as the positive electrode) were placed in sequence and sealed within an aluminum plastic pouch. Next, an electrolyte (including aluminum chloride (AlCl₃), copper chloride (CuCl₂), and 1-ethyl-3-methylimidazolium chloride ([EMIm]Cl), wherein the molar ratio of CuCl₂ to AlCl₃ was about 1:13, and the molar ratio of AlCl₃ and CuCl₂ to [EMIm]Cl was about 1.4:1) was injected into the aluminum plastic pouch, obtaining the metal-ion battery (7).

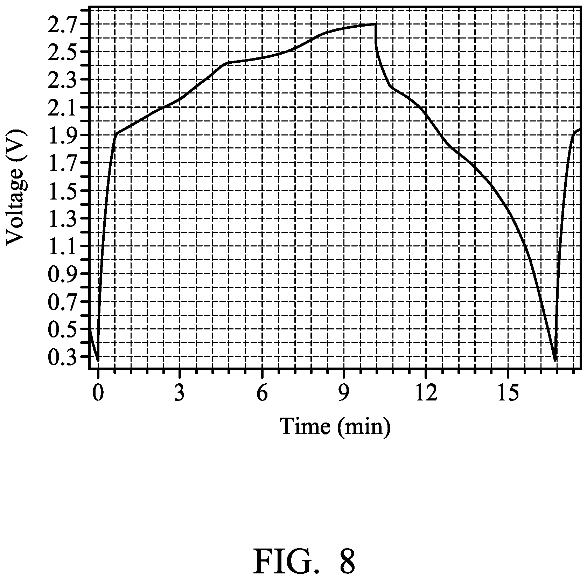

Next, the metal-ion battery (7) of Example 6 was charged (to about 2.7V) and discharged (to about 0.25V) at a current density of about 1000 mA/g by a NEWARE battery analyzer to analyze the performance thereof. The maximum specific capacity of the metal-ion battery (7) is about 112 mAh/g, as shown in Table 2. FIG. 8 is a graph plotting voltage against time during the charging and discharging of the metal-ion battery (7) of Example 6. As shown in FIG. 8, a plurality of charging platforms in a range from 1.9V to 2.7V and a plurality of discharging platforms in a range from 2.3V to 0.25V were observed.

### Example 7:

An aluminum foil (with a thickness of 0.025mm) was cut to obtain an aluminum electrode. Next, a separator (two layers with trade No. Whatman GFA) was provided. Next, a graphite electrode (including an active layer disposed on a current-collecting substrate, wherein the current-collecting substrate was carbon fiber paper, and the active layer was expanded graphite (66mg)) was provided. Next, the aluminum electrode (serving as the negative electrode), the separator, and the graphite electrode (serving as the positive electrode) were placed in sequence and sealed within an aluminum plastic pouch. Next, an electrolyte (including aluminum chloride (AlCl₃), manganese chloride (MnCl₂), and 1-ethyl-3-methylimidazolium chloride ([EMIm]Cl), wherein the molar ratio of MnCl₂ to AlCl₃ was about 1:13, and the molar ratio of AlCl₃ and MnCl₂ to [EMIm]Cl was about 1.4:1) was injected into the aluminum plastic pouch, obtaining the metal-ion battery (8).

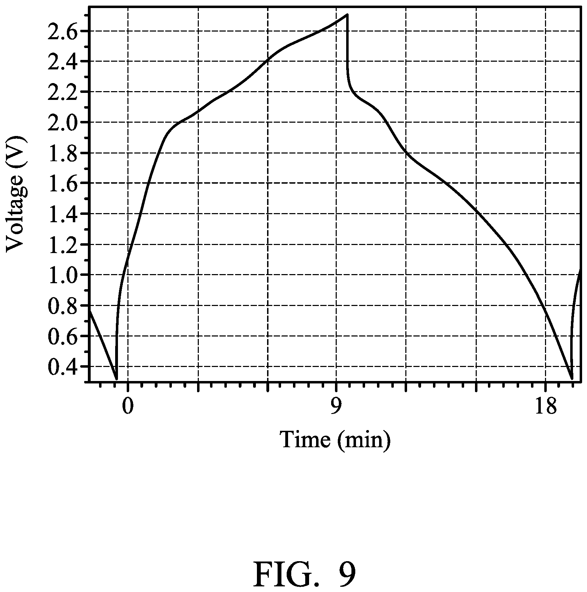

Next, the metal-ion battery (8) of Example 7 was charged (to about 2.7V) and discharged (to about 0.3V) at a current density of about 1000 mA/g by a NEWARE battery analyzer to analyze the performance thereof. The maximum specific capacity of the metal-ion battery (8) is about 162 mAh/g, as shown in Table 2 and FIG. 9.

**Table 2**

| | metal chloride | maximum specific capacity (mAh/g) |
|---|---|---|
| metal-ion battery (5) | AlCl₃ | 72 |
| metal-ion battery (6) | AlCl₃/ZnCl₂ (13:1) | 106 |
| metal-ion battery (7) | AlCl₃/CuCl₂ (13:1) | 112 |
| metal-ion battery (8) | AlCl₃/MnCl₂ (13:1) | 162 |

As shown in Table 2, in comparison with the metal-ion battery (5) (the electrolyte of metal-ion battery (5) consisting of aluminum chloride and [EMIm]Cl), the maximum specific capacity of the metal-ion batteries (6)-(8) are about 1.38-2.25 times higher than that of the metal-ion battery (5) and the charging/discharging platforms of the metal-ion batteries (6)-(8) are increased, since the electrolyte of the metal-ion batteries (6)-(8) include both AlCl₃ and ZnCl₂ (CuCl₂ or MnCl₂).

### Example 8:

A carbon paper (with a thickness of 0.24mm, available from CeTech Co., Ltd.) was cut to obtain a negative electrode. Next, a separator (two layers with trade No. Whatman GFA) was provided. Next, a graphite electrode (including an active layer disposed on a current-collecting substrate, wherein the current-collecting substrate was carbon fiber paper, and the active layer was expanded graphite (128mg)) was provided. Next, the negative electrode, the separator, and the graphite electrode (serving as the positive electrode) were placed in sequence and sealed within an aluminum plastic pouch. Next, an electrolyte (including aluminum chloride (AlCl₃), ferrous chloride (FeCl₂), and 1-ethyl-3-methylimidazolium chloride ([EMIm]Cl), wherein the molar ratio of FeCl₂ to AlCl₃ was about 1:13, and the molar ratio of AlCl₃ and FeCl₂ to [EMIm]Cl was about 1.4:1) was injected into the aluminum plastic pouch, obtaining the metal-ion battery (9).

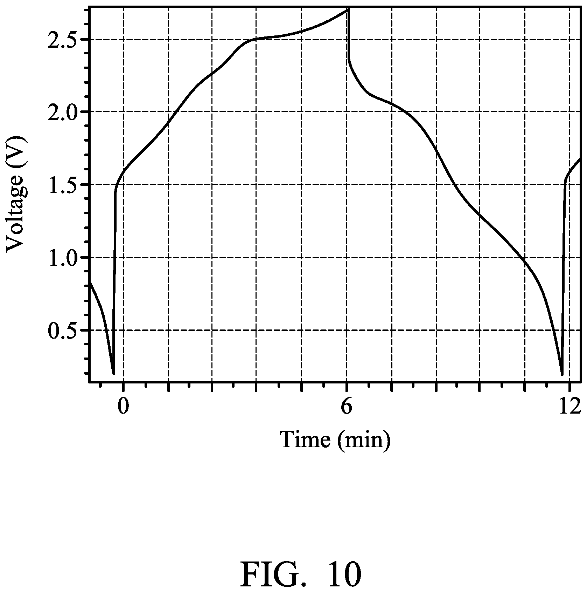

Next, the metal-ion battery (9) of Example 8 was charged (to about 2.7V) and discharged (to about 0.2V) at a current density of about 1000 mA/g by a NEWARE battery analyzer to analyze the performance thereof. The maximum specific capacity of the metal-ion battery (9) is about 96 mAh/g, as shown in Table 3 and FIG. 10.

### Example 9:

A stainless steel foil (with a thickness of 0.1mm, sold and manufactured by Nippon Steel Corporation with a trade No. YUS190)(main elements of the stainless steel foil were iron and chromium) was cut to obtain a stainless steel electrode. Next, a separator (two layers with trade No. Whatman GFA) was provided. Next, a graphite electrode (including an active layer disposed on a current-collecting substrate, wherein the current-collecting substrate was carbon fiber paper, and the active layer was expanded graphite (62mg)) was provided. Next, the stainless steel electrode (serving as the negative electrode), the separator, and the graphite electrode (serving as the positive electrode) were placed in sequence and sealed within an aluminum plastic pouch. Next, an electrolyte (including aluminum chloride (AlCl₃), ferrous chloride (FeCl₂), and 1-ethyl-3-methylimidazolium chloride ([EMIm]Cl), wherein the molar ratio of FeCl₂ to AlCl₃ was about 1:13, and the molar ratio of AlCl₃ and FeCl₂ to [EMIm]Cl was about 1.4:1) was injected into the aluminum plastic pouch, obtaining the metal-ion battery (10).

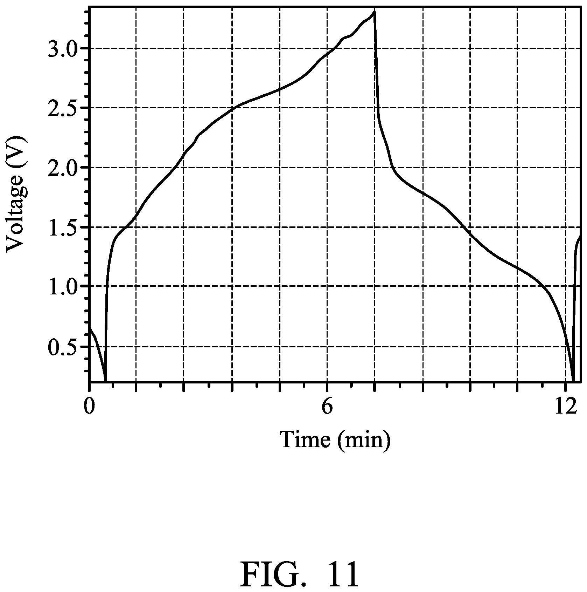

Next, the metal-ion battery (10) of Example 9 was charged (to about 3.3V) and discharged (to about 0.2V) at a current density of about 1000 mA/g by a NEWARE battery analyzer to analyze the performance thereof. The maximum specific capacity of the metal-ion battery (10) is about 87 mAh/g, as shown in Table 3 and FIG. 11.

### Example 10:

A copper foil (with a thickness of 0.025mm, sold and manufactured by Alfa Aesar) was cut to obtain a copper electrode. Next, a separator (two layers with trade No. Whatman GFA) was provided. Next, a graphite electrode (including an active layer disposed on a current-collecting substrate, wherein the current-collecting substrate was carbon fiber paper, and the active layer was expanded graphite (66mg)) was provided. Next, the copper electrode (serving as the negative electrode), the separator, and the graphite electrode (serving as the positive electrode) were placed in sequence and sealed within an aluminum plastic pouch. Next, an electrolyte (including aluminum chloride (AlCl₃), ferrous chloride (FeCl₂), and 1-ethyl-3-methylimidazolium chloride ([EMIm]Cl), wherein the molar ratio of FeCl₂ to AlCl₃ was about 1:13, and the molar ratio of AlCl₃ and FeCl₂ to [EMIm]Cl was about 1.4:1) was injected into the aluminum plastic pouch, obtaining the metal-ion battery (11).

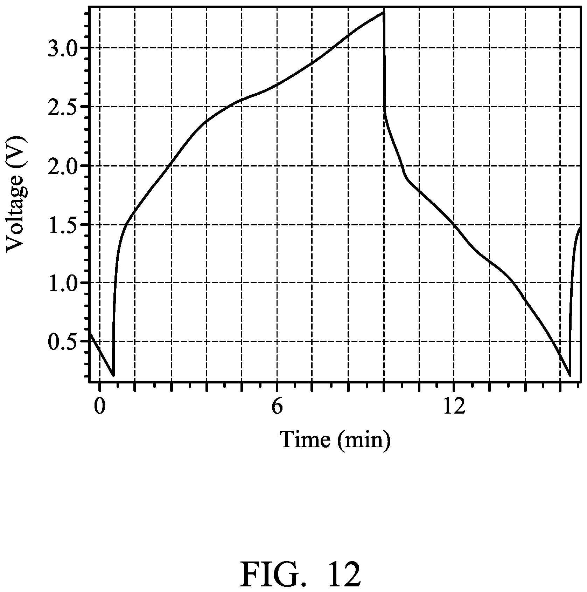

Next, the metal-ion battery (11) of Example 10 was charged (to about 3.3V) and discharged (to about 0.3V) at a current density of about 1000 mA/g by a NEWARE battery analyzer to analyze the performance thereof. The maximum specific capacity of the metal-ion battery (11) is about 105 mAh/g, as shown in Table 3 and FIG. 12.

**Table 3**

| | negative electrode | metal chloride | maximum specific capacity (mAh/g) |
|---|---|---|---|
| metal-ion battery (5) | aluminum | AlCl₃ | 72 |
| metal-ion battery (9) | carbon paper | AlCl₃/FeCl₂(13:1) | 96.1 |
| metal-ion battery (10) | stainless steel foil | AlCl₃/FeCl₂(13:1) | 87 |
| metal-ion battery (11) | copper foil | AlCl₃/FeCl₂(13:1) | 105 |

As shown in Table 3, when replacing the aluminum electrode with carbon paper, stainless steel foil, or copper foil, the maximum specific capacity of the metal-ion batteries (9)-(11) are about 1.38-1.55 times higher than that of the metal-ion battery (5) and the charging/discharging platforms of the metal-ion batteries (9)-(11) are increased, since the electrolyte of the metal-ion batteries (9)-(11) include both AlCl₃ and FeCl₂.

It will be clear that various modifications and variations can be made to the disclosed methods and materials. It is intended that the specification and examples be considered as exemplary only, with the true scope of the disclosure being indicated by the appended claims.

## Claims

1. A metal-ion battery (100), comprising:
a positive electrode (10);
a separator (14);
a negative electrode (12), wherein the positive electrode is separated from the negative electrode (12) by the separator; and
an electrolyte (20) disposed between the positive electrode (10) and the negative electrode (12) and contacting the positive electrode (10) and the negative electrode (12), wherein
the electrolyte (20) comprises an ionic liquid with a melting point less than 100°C, aluminum halide, and metal halide, wherein
the ionic liquid is selected from alkylimidazolium salt, alkylpyridinium salt, alkylfluoropyrazolium salt, alkyltriazolium salt, aralkylammonium salt, alkylalkoxyammonium salt, aralkylphosphonium salt, aralkylsulfonium salt, or a combination thereof; wherein
the metal halide is silver halide, copper halide, cobalt halide, ferric halide, indium halide, cadmium halide, nickel halide, tin halide, chromium halide, lanthanum halide, yttrium halide, titanium halide, manganese halide, molybdenum halide, or a combination thereof, wherein
the molar ratio of the total mole of the metal halide and the aluminum halide to the ionic liquid is from 1.1:1 to 2.1:1; wherein
the positive electrode (10) consists of a current-collecting layer (11) and an active material (13); and wherein
the current-collecting layer (11) is conductive carbon substrate and the conductive carbon substrate is carbon cloth, carbon felt, or carbon paper; wherein
the active material (13) is layered active layer; wherein
the active material (13) is graphite, carbon nanotube, graphene, or a combination thereof; and/or wherein
the graphite is natural graphite, artificial graphite, mesophase carbon microbead, pyrolytic graphite, foamed graphite, flake graphite, expanded graphite, or a combination thereof;
the negative electrode (12) comprises a metal or an alloy of the metal, a current-collecting layer, or a combination thereof; and wherein
the metal or the alloy of the metal comprises silver, copper, iron, cobalt, aluminum, zinc, indium, cadmium, nickel, tin, chromium, lanthanum, yttrium, titanium, manganese, tungsten, tantalum, or molybdenum.

2. The metal-ion battery as claimed in Claim 1, wherein
the molar ratio of the metal halide to the aluminum halide is from 1:100 to 1:1.

3. The metal-ion battery as claimed in any one of Claims 1-2, wherein the metal halide reacts with the ionic liquid to form a halometallate and the aluminum halide reacts with the ionic liquid to form a haloaluminate, after charging and discharging of the metal-ion battery.

4. The metal-ion battery as claimed in Claim 3, wherein the ion size of an anion of the halometallate is less than the ion size of an anion of the haloaluminate.

5. A method for fabricating a metal-ion battery according to any of the preceding claims, comprising:
providing a positive electrode (10) and a negative electrode (12);
providing a separator (14) to separate the positive electrode (10) from the negative electrode (12); and
providing an electrolyte (20), wherein the electrolyte (20) is disposed between the positive electrode (10) and the negative electrode (12) and contacting the positive electrode (10) and the negative electrode (12), wherein
the electrolyte (20) comprises an ionic liquid with a melting point less than 100°C, aluminum halide, and metal halide, and wherein
the ionic liquid is selected from alkylimidazolium salt, alkylpyridinium salt, alkylfluoropyrazolium salt, alkyltriazolium salt, aralkylammonium salt, alkylalkoxyammonium salt, aralkylphosphonium salt, aralkylsulfonium salt, or a combination thereof; wherein
the metal halide is silver halide, copper halide, cobalt halide, ferric halide, indium halide, cadmium halide, nickel halide, tin halide, chromium halide, lanthanum halide, yttrium halide, titanium halide, manganese halide, molybdenum halide, or a combination thereof; wherein
the molar ratio of the total mole of the metal halide and the aluminum halide to the ionic liquid is from 1.1:1 to 2.1:1; wherein
the positive electrode (10) consists of a current-collecting layer (11) and an active material (13); and wherein
the current-collecting layer (11) is conductive carbon substrate and the conductive carbon substrate is carbon cloth, carbon felt, or carbon paper; wherein
the active material (13) is layered active layer; wherein
the active material (13) is graphite, carbon nanotube, graphene, or a combination thereof; and/or wherein
the graphite is natural graphite, artificial graphite, mesophase carbon microbead, pyrolytic graphite, foamed graphite, flake graphite, expanded graphite, or a combination thereof;
the negative electrode (12) comprises a metal or an alloy of the metal, a current-collecting layer, or a combination thereof; and wherein
the metal or the alloy of the metal comprises silver, copper, iron, cobalt, aluminum, zinc, indium, cadmium, nickel, tin, chromium, lanthanum, yttrium, titanium, manganese, tungsten, tantalum, or molybdenum.

6. The method as claimed in Claim 5, wherein the positive electrode (10) is made of a pre-intercalated material prepared by electrochemical process or vapor phase intercalation.

7. The method as claimed in Claim 5, wherein the providing the electrolyte comprises:
mixing a part of the ionic liquid and the metal halide to obtain a mixture, wherein the ionic liquid and the metal halide are disposed between the positive electrode (10) and the negative electrode (12); and wherein the method further comprises
reacting the metal halide with the ionic liquid to form a halometallate; and
applying a bias voltage between the positive electrode (10) and the negative electrode, so that the halometallate intercalates into the positive electrode.

8. The method as claimed in Claim 5, wherein the providing the electrolyte comprises
mixing a part of the ionic liquid and the aluminum halide to obtain a mixture, wherein the ionic liquid and the aluminum halide are disposed between the positive electrode (10) and the negative electrode (12); and wherein the method further comprises
reacting the aluminum halide with the ionic liquid to form a haloaluminate; and
applying a bias voltage between the positive electrode (10) and the negative electrode (12), so that the haloaluminate intercalates into the positive electrode (10).

9. The method as claimed in Claim 6, wherein the method for preparing the pre-intercalated material comprises:
heating the metal halide to produce a metal halide gas; and
subjecting the positive electrode (10) to a pre-intercalation by means of the metal halide gas.

10. The method as claimed in Claim 6, wherein the method for preparing the pre-intercalated material comprises:
heating the aluminum halide to produce an aluminum halide gas; and
subjecting the positive electrode (10) to a pre-intercalation by means of the aluminum halide gas.

## Patentansprüche

1. Metallionenbatterie (100) mit:
einer positiven Elektrode (10);
einem Separator (14);
einer negativen Elektrode (12), wobei die positive Elektrode durch den Separator von der negativen Elektrode (12) getrennt ist; und
einem Elektrolyten (20), der zwischen der positiven Elektrode (10) und der negativen Elektrode (12) angeordnet ist und mit der positiven Elektrode (10) und der negativen Elektrode (12) in Kontakt steht,
wobei der Elektrolyt (20) eine ionische Flüssigkeit mit einem Schmelzpunkt von weniger als 100°C, Aluminiumhalogenid und Metallhalogenid enthält,
wobei die ionische Flüssigkeit ausgewählt ist aus Alkylimidazoliumsalz, Alkylpyridiniumsalz, Alkylfluorpyrazoliumsalz, Alkyltriazoliumsalz, Aralkylammoniumsalz, Alkylalkoxyammoniumsalz, Aralkylphosphoniumsalz, Aralkylsulfoniumsalz oder einer Kombination davon,
wobei das Metallhalogenid Silberhalogenid, Kupferhalogenid, Kobalthalogenid, Eisenhalogenid, Indiumhalogenid, Cadmiumhalogenid, Nickelhalogenid, Zinnhalogenid, Chromhalogenid, Lanthanhalogenid, Yttriumhalogenid, Titanhalogenid, Manganhalogenid, Molybdänhalogenid oder eine Kombination davon ist,
wobei das Molverhältnis des gesamten Molanteils des Metallhalogenids und des Aluminiumhalogenids zur ionischen Flüssigkeit 1,1:1 bis 2,1:1 beträgt,
wobei die positive Elektrode (10) aus einer Stromsammeischicht (11) und einem aktiven Material (13) besteht, und
wobei die Stromsammeischicht (11) ein leitfähiges Kohlenstoffsubstrat ist und das leitfähige Kohlenstoffsubstrat ein Kohlenstofftuch, Kohlenstofffilz oder Kohlepapier ist,
wobei das aktive Material (13) eine aktive Schichtstruktur ist,
wobei das aktive Material (13) aus Graphit, Kohlenstoffnanoröhrchen, Graphen oder eine Kombination davon besteht, und/oder
wobei der Graphit natürlicher Graphit, künstlicher Graphit, Mesophasen-Kohlenstoff-Mikrokügelchen, pyrolytischer Graphit, geschäumter Graphit, Flockengraphit, expandierter Graphit oder eine Kombination davon ist,
die negative Elektrode (12) ein Metall oder eine Legierung des Metalls, eine Stromsammeischicht oder eine Kombination davon aufweist, und
wobei das Metall oder die Legierung des Metalls Silber, Kupfer, Eisen, Kobalt, Aluminium, Zink, Indium, Cadmium, Nickel, Zinn, Chrom, Lanthan, Yttrium, Titan, Mangan, Wolfram, Tantal oder Molybdän aufweist.

2. Metallionenbatterie nach Anspruch 1, wobei das Molverhältnis des Metallhalogenids zum Aluminiumhalogenid 1:100 bis 1:1 beträgt.

3. Metallionenbatterie nach Anspruch 1 oder 2, wobei nach dem Laden und Entladen der Metallionenbatterie das Metallhalogenid mit der ionischen Flüssigkeit unter Bildung eines Halometallats reagiert und das Aluminiumhalogenid mit der ionischen Flüssigkeit unter Bildung eines Haloaluminats reagiert.

4. Metallionenbatterie nach Anspruch 3, wobei die lonengröße eines Anions des Halometallats kleiner ist als die lonengröße eines Anions des Haloaluminats.

5. Verfahren zum Herstellen einer Metallionenbatterie nach einem der vorhergehenden Ansprüche, mit den Schritten:
Bereitstellen einer positiven Elektrode (10) und einer negativen Elektrode (12);
Bereitstellen eines Separators (14) zum Trennen der positiven Elektrode (10) von der negativen Elektrode (12); und
Bereitstellen eines Elektrolyten (20), wobei der Elektrolyt (20) zwischen der positiven Elektrode (10) und der negativen Elektrode (12) angeordnet ist und mit der positiven Elektrode (10) und der negativen Elektrode (12) in Kontakt steht,
wobei der Elektrolyt (20) eine ionische Flüssigkeit mit einem Schmelzpunkt von weniger als 100°C, Aluminiumhalogenid und Metallhalogenid enthält, und
wobei die ionische Flüssigkeit ausgewählt ist aus Alkylimidazoliumsalz, Alkylpyridiniumsalz, Alkylfluorpyrazoliumsalz, Alkyltriazoliumsalz, Aralkylammoniumsalz, Alkylalkoxyammoniumsalz, Aralkylphosphoniumsalz, Aralkylsulfoniumsalz oder einer Kombination davon,
wobei das Metallhalogenid Silberhalogenid, Kupferhalogenid, Kobalthalogenid, Eisenhalogenid, Indiumhalogenid, Cadmiumhalogenid, Nickelhalogenid, Zinnhalogenid, Chromhalogenid, Lanthanhalogenid, Yttriumhalogenid, Titanhalogenid, Manganhalogenid, Molybdänhalogenid oder eine Kombination davon ist,
wobei das Molverhältnis des gesamten Molanteils des Metallhalogenids und des Aluminiumhalogenids zur ionischen Flüssigkeit 1,1:1 bis 2,1:1 beträgt,
wobei die positive Elektrode (10) aus einer Stromsammelschicht (11) und einem aktiven Material (13) besteht, und
wobei die Stromsammelschicht (11) ein leitfähiges Kohlenstoffsubstrat ist und das leitfähige Kohlenstoffsubstrat ein Kohlenstofftuch, ein Kohlenstofffilz oder ein Kohlepapier ist,
wobei das aktive Material (13) eine aktive Schichtstruktur ist,
wobei das aktive Material (13) aus Graphit, Kohlenstoffnanoröhrchen, Graphen oder einer Kombination davon besteht, und/oder
wobei der Graphit natürlicher Graphit, künstlicher Graphit, Mesophasen-Kohlenstoff-Mikrokügelchen, pyrolytischer Graphit, geschäumter Graphit, Flockengraphit, expandierter Graphit oder eine Kombination davon ist, die negative Elektrode (12) ein Metall oder eine Legierung des Metalls, eine Stromsammelschicht oder eine Kombination davon aufweist, und
wobei das Metall oder die Legierung des Metalls Silber, Kupfer, Eisen, Kobalt, Aluminium, Zink, Indium, Cadmium, Nickel, Zinn, Chrom, Lanthan, Yttrium, Titan, Mangan, Wolfram, Tantal oder Molybdän aufweist.

6. Verfahren nach Anspruch 5, wobei die positive Elektrode (10) aus einem vorinterkalierten Material besteht, das hergestellt ist durch einen elektrochemischen Prozess oder Dampfphaseninterkalation.

7. Verfahren nach Anspruch 5, wobei das Bereitstellen des Elektrolyten aufweist:
Mischen eines Teils der ionischen Flüssigkeit und des Metallhalogenids, um ein Gemisch zu erhalten, wobei die ionische Flüssigkeit und das Metallhalogenid zwischen der positiven Elektrode (10) und der negativen Elektrode (12) angeordnet werden,
wobei das Verfahren ferner aufweist:
Umsetzen des Metallhalogenids mit der ionischen Flüssigkeit, um ein Halometallat zu bilden; und
Anlegen einer Vorspannung zwischen der positiven Elektrode (10) und der negativen Elektrode, so dass das Halometallat in die positive Elektrode interkaliert.

8. Verfahren nach Anspruch 5, wobei das Bereitstellen des Elektrolyten aufweist:
Mischen eines Teils der ionischen Flüssigkeit und des Aluminiumhalogenids, um ein Gemisch zu erhalten, wobei die ionische Flüssigkeit und das Aluminiumhalogenid zwischen der positiven Elektrode (10) und der negativen Elektrode (12) angeordnet werden,
wobei das Verfahren aufweist:
Umsetzen des Aluminiumhalogenids mit der ionischen Flüssigkeit, um ein Haloaluminat zu bilden; und
Anlegen einer Vorspannung zwischen der positiven Elektrode (10) und der negativen Elektrode (12), so dass das Haloaluminat in die positive Elektrode (10) interkaliert.

9. Verfahren nach Anspruch 6, wobei das Verfahren zum Herstellen des vorinkalierten Materials aufweist:
Erwärmen des Metallhalogenids zum Erzeugen eines Metallhalogenidgases; und
Unterziehen der positiven Elektrode (10) einer Vorinterkalation mittels des Metallhalogenidgases.

10. Verfahren nach Anspruch 6, wobei das Verfahren zum Herstellen des vorinterkalierten Materials aufweist:
Erwärmen des Aluminiumhalogenids zum Erzeugen eines Aluminiumhalogenidgases; und
Unterziehen der positiven Elektrode (10) einer Vorinterkalation mittels des Aluminiumhalogenidgases.

## Revendications

1. Batterie à ions métalliques (100) comprenant :
une électrode positive (10) ;
un séparateur (14) ;
une électrode négative (12), l'électrode positive étant séparée de l'électrode négative (12) par le séparateur ; et
un électrolyte (20) disposé entre l'électrode positive (10) et l'électrode négative (12) et étant en contact avec l'électrode positive (10) et l'électrode négative (12) où
l'électrolyte (20) comprend un liquide ionique avec un point de fusion inférieur à 100 °C, un halogénure d'aluminium, et un halogénure métallique, où
le liquide ionique est choisi parmi un sel d'alkyl imidazolium, un sel d'alkyl pyridynium, un sel d'alkyl fluoro pyrazolium, un sel d'alkyl triazolium, un sel d'aralkyl ammonium, un sel d'alkyl alcoxy ammonium, un sel d'aralkyl phosphonium, un sel d'aralkyl sulfonium, ou une combinaison de ceux-ci ; où
l'halogénure métallique est un halogénure d'argent, un halogénure de cuivre, un halogénure de cobalt, un halogénure ferrique, un halogénure d'indium, un halogénure de cadmium, un halogénure de nickel, un halogénure d'étain, un halogénure de chrome, un halogénure de lanthane, un halogénure d'yttrium, un halogénure de titane, un halogénure de manganèse, un halogénure de molybdène ou une combinaison de ceux-ci, où
le ratio molaire des moles totales de l'halogénure métallique et de l'halogénure d'aluminium sur le liquide ionique va de 1,1 : 1 à 2,1 : 1 ; où
l'électrode positive (10) est constituée d'une couche collectrice de courant (11) et d'un matériau actif (13) ; et où
la couche collectrice de courant (11) est du substrat de carbone conducteur et le substrat de carbone conducteur est du tissu de carbone, du feutre de carbone ou du papier de carbone ; où
le matériau actif (13) est une couche active en couches ; où
le matériau actif (13) est du graphite, du nanotube de carbone, du graphène ou une combinaison de ceux-ci ; et/ou où
le graphite est du graphite naturel, du graphique artificiel, de la microbille de carbone mésophase, du graphite pyrolytique, du graphite en mousse, du graphite lamellaire, du graphite expansé ou une combinaison de ceux-ci ;
l'électrode négative (12) comprend un métal ou un alliage du métal, une couche collectrice de courant, ou une combinaison de ceux-ci ; et où
le métal ou l'alliage du métal comprend de l'argent, du cuivre, du fer, du cobalt, de l'aluminium, du zinc, de l'indium, du cadmium, du nickel, de l'étain, du chrome, du lanthane, de l'yttrium, du titane, du manganèse, du tungstène, du tantale ou du molybdène.

2. Batterie à ions métalliques selon la revendication 1, dans laquelle
le ratio molaire de l'halogénure métallique sur l'halogénure d'aluminium va de 1 : 100 à 1 : 1.

3. Batterie à ions métalliques selon l'une quelconque des revendications 1 ou 2, dans laquelle l'halogénure métallique réagit avec le liquide ionique pour former un halométallate et l'halogénure d'aluminium réagit avec le liquide ionique pour former un haloaluminate, après la charge et la décharge de la batterie à ions métalliques.

4. Batterie à ions métalliques selon la revendication 3, dans laquelle la taille d'un ion d'un anion de l'halométallate est inférieure à la taille d'un ion d'un anion de l'haloaluminate.

5. Procédé de fabrication d'une batterie à ions métalliques selon l'une quelconque des revendications précédentes, comprenant :
la mise en place d'une électrode positive (10) et d'une électrode négative (12) ;
la mise en place d'un séparateur (4) pour séparer l'électrode positive (10) de l'électrode négative (12) ; et
la mise en place d'un électrolyte (20), où l'électrolyte (20) est disposé entre l'électrode positive (10) et l'électrode négative (12) et étant en contact avec l'électrode positive (10) et l'électrode négative (12), où
l'électrolyte (20) comprend un liquide ionique avec un point de fusion inférieur à 100 °C, un halogénure d'aluminium, et un halogénure métallique, et où
le liquide ionique est choisi parmi un sel d'alkyl imidazolium, un sel d'alkyl pyridynium, un sel d'alkyl fluoro pyrazolium, un sel d'alkyl triazolium, un sel d'aralkyl ammonium, un sel d'alkyl alcoxy ammonium, un sel d'aralkyl phosphonium, un sel d'aralkyl sulfonium, ou une combinaison de ceux-ci ; où
l'halogénure métallique est un halogénure d'argent, un halogénure de cuivre, un halogénure de cobalt, un halogénure ferrique, un halogénure d'indium, un halogénure de cadmium, un halogénure de nickel, un halogénure d'étain, un halogénure de chrome, un halogénure de lanthane, un halogénure d'yttrium, un halogénure de titane, un halogénure de manganèse, un halogénure de molybdène ou une combinaison de ceux-ci, où
le ratio molaire des moles totales de l'halogénure métallique et de l'halogénure d'aluminium sur le liquide ionique va de 1,1 : 1 à 2,1 : 1 ; où
l'électrode positive (10) est constituée d'une couche collectrice de courant (11) et d'un matériau actif (13) ; et où
la couche collectrice de courant (11) est du substrat de carbone conducteur et le substrat de carbone conducteur est du tissu de carbone, du feutre de carbone ou du papier de carbone ; où
le matériau actif (13) est une couche active en couches ; où
le matériau actif (13) est du graphite, du nanotube de carbone, du graphène ou une combinaison de ceux-ci ; et/ou où
le graphite est du graphite naturel, du graphique artificiel, de la microbille de carbone mésophase, du graphite pyrolytique, du graphite en mousse, du graphite lamellaire, du graphite expansé ou une combinaison de ceux-ci ;
l'électrode négative (12) comprend un métal ou un alliage du métal, une couche collectrice de courant, ou une combinaison de ceux-ci ; et où
le métal ou l'alliage du métal comprend de l'argent, du cuivre, du fer, du cobalt, de l'aluminium, du zinc, de l'indium, du cadmium, du nickel, de l'étain, du chrome, du lanthane, de l'yttrium, du titane, du manganèse, du tungstène, du tantale ou du molybdène.

6. Procédé selon la revendication 5, dans lequel l'électrode positive (10) est fabriquée à base d'un matériau pré-intercalé préparé par un procédé électrochimique ou un intercalage de phase vapeur.

7. Procédé selon la revendication 5, dans lequel la mise en place de l'électrolyte comprend :
le mélange d'une partie du liquide ionique et de l'halogénure métallique pour obtenir un mélange, où le liquide ionique et l'halogénure métallique sont disposés entre l'électrode positive (10) et l'électrode négative (12) ; et où le procédé comprend en outre
la réaction de l'halogénure métallique avec le liquide pour former un halométallate ; et
l'application d'une tension de polarisation entre l'électrode positive (10) et l'électrode négative, de sorte que l'halométallate s'intercale dans l'électrode positive.

8. Procédé selon la revendication 5, dans lequel la mise en place de l'électrolyte comprend
le mélange d'une partie du liquide ionique et de l'halogénure d'aluminium pour obtenir un mélange, où le liquide ionique et l'halogénure d'aluminium sont disposés entre l'électrode positive (10) et l'électrode négative (12) ; et où le procédé comprend en outre
la réaction de l'halogénure d'aluminium avec le liquide pour former un haloaluminate ; et
l'application d'une tension de polarisation entre l'électrode positive (10) et l'électrode négative (12), de sorte que l'haloaluminate s'intercale dans l'électrode positive (10).

9. Procédé selon la revendication 6, où le procédé de préparation du matériau pré-intercalé comprend :
le chauffage de l'halogénure métallique pour produire un gaz d'halogénure métallique ; et
la soumission de l'électrode positive (10) à un pré-intercalage au moyen du gaz d'halogénure métallique.

10. Procédé selon la revendication 6, où le procédé de préparation du matériau pré-intercalé comprend :
le chauffage de l'halogénure d'aluminium pour produire un gaz d'halogénure d'aluminium ; et
la soumission de l'électrode positive (10) à un pré-intercalage au moyen du gaz d'halogénure d'aluminium.
